# DEMANDE DE BREVET EUROPEEN

(11) **EP 4 201 980 A1**
(43) Date de publication de la demande: **28.06.2023**
(21) Numéro de dépôt: 22212331.7
(22) Date de dépôt: 05.04.2018
(51) Int. Cl.: C08J 5/10

(54) **PROCEDE D'IMPREGNATION DE FIBRES DE RENFORT AVEC DES POLYARYLETHERCETONES ET SEMI-PRODUITS AINSI OBTENUS**

(30) Priorité: 05.04.2017 FR 1752951
(62) Demande divisionnaire de: 18718898.2
(71) Demandeur: ARKEMA FRANCE, 92700 Colombes (FR)
(72) Inventeur: BRULE, Benoît, 27470 SERQUIGNY (FR); CAYZAC, Henri-Alexandre, 27470 SERQUIGNY (FR); LE, Guillaume, 27470 SERQUIGNY (FR); PASCAL, Jérôme, 27470 SERQUIGNY (FR); SGUERRA, Fabien, 06700 SAINT LAURENT DU VAR (FR)
(74) Mandataire: Arkema Patent

(57) **Abrégé**

L'invention vise principalement un procédé de préparation d'un semi-produit comprenant une résine à base de PAEK et des fibres de renfort, comprenant les étapes de :
a. Préparation d'une dispersion comprenant une résine à base de PAEK sous forme pulvérulente dispersée dans une phase aqueuse comprenant un tensioactif ;
b. Mise en contact des fibres de renfort avec ladite dispersion aqueuse ;
c. Séchage des fibres imprégnées de dispersion ; et
d. Chauffage des fibres imprégnées à une température suffisante pour la fusion de la résine, de sorte à former un semi-produit,
caractérisé en ce que le tensioactif est un tensioactif thermiquement stable. Elle vise par ailleurs la dispersion utile dans ledit procédé. Enfin, elle vise les semi-produits susceptibles d'être obtenus ainsi que leur utilisation pour la fabrication de matériaux composites.

## Description

### [Domaine technique]

La présente demande de brevet concerne le domaine de la fabrication de semi-produits comprenant une matrice thermoplastique et des fibres de renfort. Elle concerne également de tels semi-produits ainsi que leur utilisation pour la fabrication de pièces composites.

### [Technique antérieure]

Les matériaux composites associant une résine thermoplastique à des fibres de renfort présentent en raison de leurs excellentes propriétés mécaniques pour un faible poids un grand intérêt dans de nombreux domaines, notamment dans l'industrie aéronautique et spatiale, mais aussi dans l'industrie automobile et des équipements de sport.

Ces matériaux composites sont généralement fabriqués par consolidation de semi-produits constitués de fibres de renfort enrobées de résine tels que des pré-imprégnés sous forme de nappes unidirectionnelles, de mèches ou de tissés.

Ces semi-produits peuvent être obtenus par imprégnation des fibres par la résine. Il existe différents procédés d'imprégnation, dans lesquels la résine peut être fondue, dissoute dans un solvant, ou encore sous forme de poudre, soit en lit fluidisée, soit dispersée dans une solution aqueuse. Les fibres imprégnées sont ensuite le cas échéant débarrassées du solvant ou de la solution aqueuse puis chauffées afin de fondre la résine retenue et former le semi-produit.

L'imprégnation dans un bain de dispersion aqueuse est intéressante au niveau économique et environnemental. Néanmoins, ce procédé requiert afin d'obtenir une charge uniforme des fibres en résine, d'assurer une répartition homogène de la résine dans la dispersion.

Ainsi, la demande de brevet WO 88/03468 propose de stabiliser la suspension en la rendant très visqueuse (au moins 50 Pa·s) et en ajoutant en outre le cas échéant un tensioactif.

Avec une approche similaire, le brevet US 5,236,972 propose d'ajouter un polymère hydrosoluble, un agent de mouillage, et en outre un biocide, un plastifiant et un agent anti-mousse à la dispersion.

Le brevet US 5,888,580 propose d'utiliser au contraire une dispersion à faible viscosité et contenant peu d'agent dispersant, et de réguler la charge des fibres en résine par le biais de la concentration en résine de la dispersion et le temps de séjour. Cependant, les pièces composites fabriquées à partir de tels semi-produits présentent une porosité élevée et des propriétés mécaniques non optimales.

Afin de remédier à ce problème, la demande FR 3 034 425 propose de disperser la résine thermoplastique au moyen d'un alcool alcoxylé tensioactif spécifique, à savoir l'alcool stéarylique éthoxylé 100 fois, et d'associer un dispositif d'agitation pour maintenir la suspension homogène. Ainsi, les auteurs affirment pouvoir consolider des produits composites sans porosités. Néanmoins, on constate que l'ajout d'un tel tensioactif engendre une augmentation de la viscosité de la résine, notamment dans les polymères à haut point de fusion comme les PAEK. Une viscosité élevée de la résine peut conduire à des défauts de formage ultérieurs. En effet, à l'état fondu, la résine polymérique trop visqueuse n'est plus capable de s'écouler convenablement. De ce fait, il est difficile d'aboutir à des pièces composites ayant la forme et l'aspect de surface souhaités.

En particulier, il est fréquent d'observer l'apparition de plissages en surface et des problèmes de tenue des soudures réalisées au cours de l'assemblage des pièces composites en pièces complexes. Ces défauts sont exacerbés lorsque la consolidation est réalisée à une pression inférieure à 5 bars.

De manière générale, il est intéressant de pouvoir fabriquer des pièces composites sans avoir recours à une pression élevée, puisque cela nécessite l'utilisation d'autoclaves très coûteux.

L'invention a pour but de remédier à ces problèmes et de proposer un procédé de préparation de semi-produits susceptibles d'être transformés en pièces composites ne présentant pas les défauts mentionnés ci-dessus.

Elle a également pour but de proposer un procédé de préparation de semi-produits susceptibles d'être consolidés sous faible dépression, hors autoclave.

Plus spécifiquement, l'invention a pour but de proposer un tel procédé de préparation de semi-produits dans lesquels la résine présente une viscosité et une masse moléculaire qui évolue peu suite aux cycles thermiques requis pour la fabrication de pièces composites.

### [Résumé de l'invention]

Les buts mentionnés ci-dessus ont été atteints par un procédé selon l'invention, dans lequel les fibres de renfort sont imprégnées dans une dispersion aqueuse de résine pulvérulente comportant au moins un tensioactif thermiquement stable.

En effet, la présente invention repose sur la constatation que la qualité des pièces composites à base de résines PAEK dépend notamment de la viscosité de la résine dans le semi-produit et de son évolution ultérieure. Or, les températures élevées nécessaires pour la fabrication et la consolidation de semi-produits à base de PAEK (températures généralement supérieures à 300°C) peuvent engendrer la décomposition de composés introduits pendant la fabrication en espèces réactives, ce qui peut aboutir à des réactions d'allongement de chaîne des PAEK pouvant conduire à des branchements. L'augmentation de la masse moléculaire qui en découle augmente alors la viscosité de la résine.

Or l'étude systématique des différents agents susceptibles d'être présents dans le semi-produit à base PAEK a révélé d'une part que le tensioactif utilisé dans la dispersion constituait un facteur principal de l'augmentation de la viscosité après un cycle thermique et d'autre part que cet effet était très variable selon le tensioactif choisi.

Sur cette base, il a pu être validé que l'utilisation d'un tensioactif thermiquement stable permet de limiter l'évolution de la viscosité de la résine et d'obtenir des pièces composites de qualité requise.

Sans vouloir être lié par cette hypothèse, il est supposé que de nombreux tensioactifs se décomposent dans la résine PAEK sous l'effet de la température élevée requise pour sa transformation. Les espèces réactives formées lors de la décomposition, notamment les radicaux, peuvent alors réagir avec le polymère et provoquer des réactions d'allongement de chaîne ou des branchements, lesquelles augmentent la masse moléculaire du polymère et de ce fait également sa viscosité. Or, lorsque la résine présente une viscosité élevée, elle n'est plus à même de bien imprégner et d'enrober les fibres, d'assurer une bonne adhésion des semi-produits entre eux, ni d'épouser les parois de moule, ce qui affecte la qualité des produits composites obtenus.

Aussi, selon un premier aspect, l'invention a pour objet un procédé de préparation d'un semi-produit comprenant une résine à base de PAEK et des fibres de renfort, comprenant les étapes de :
a. Préparation d'une dispersion comprenant une résine à base de PAEK sous forme pulvérulente dispersée dans une phase aqueuse comprenant au moins un tensioactif ;
b. Mise en contact des fibres de renfort avec ladite dispersion aqueuse afin d'obtenir des fibres imprégnées;
c. Séchage des fibres imprégnées de dispersion ; et
d. Chauffage des fibres imprégnées à une température suffisante pour la fusion de la résine, de sorte à former un semi-produit,
caractérisé en ce que le tensioactif est un tensioactif thermiquement stable.

Avantageusement, le tensioactif thermiquement stable comporte des groupements aromatiques. Selon un autre mode de réalisation de l'invention, le tensioactif comporte un groupe phosphorique, phosphate ou sulfonate. De préférence, il s'agit de groupes ioniques.

De préférence, les fibres de renfort sont des fibres de carbone. De préférence, les fibres de renfort employées dans le procédé de l'invention sont des fibres non ensimées.

Lorsque les fibres de renfort sont des fibres ensimées, elles sont de préférence ensimées avec un ensimage thermiquement stable.

De préférence, la résine PAEK est choisie parmi le groupe constitué de poly-éther-cétone (PEK), polyéther-éther-cétone (PEEK), poly-éther-éther-cétone-cétone (PEEKK), poly-éther-éther-cétone-cétone (PEKK), poly-éther-cétone-éther-cétone-cétone (PEKEKK), poly-éther-éther-cétone-éther-cétone (PEEKEK), poly-éther-éther-éther-cétone (PEEEK), et poly-éther-diphényle-éther-cétone (PEDEK), leurs mélanges et leurs copolymères entre eux ou avec d'autres membres de la famille des PAEK.

Lorsqu'il s'agit de résine PEKK, la résine PAEK est de préférence un PEKK présentant un pourcentage massique en motifs téréphtaliques par rapport à la somme des motifs téréphtaliques et isophtaliques compris entre 35 et 100%, en particulier entre 50 et 90% et tout particulièrement entre 55 et 85%.

Avantageusement, la résine PAEK pulvérulente dans la dispersion présente un diamètre médian en volume Dv50 de 1 à 300 µm, de préférence de 5 à 100 et tout particulièrement de 10 à 50 µm tel que mesuré selon la norme ISO 13 320, sur un dispositif Insitec de Malvern.

Selon un mode de réalisation préféré, le semi-produit est choisi parmi un pré-imprégné ou une tape.

Par ailleurs, selon un deuxième aspect, l'invention a pour objet un semi-produit susceptible d'être obtenu par ledit procédé.

De préférence, la masse moléculaire moyenne en poids M_{W} de la résine PAEK dans le semi-produit, telle que mesurée par analyse chromatographique d'exclusion stérique, n'augmente pas de plus de 100%, en particulier pas plus de 50% et tout particulièrement pas plus de 20% après traitement thermique à 375°C pendant 20 minutes.

Selon un troisième aspect, l'invention a pour objet une dispersion utile dans la préparation d'un semi-produit comprenant une résine à base de PAEK et des fibres de renfort, comprenant :
a. 1 et 50 % en poids de résine à base de PAEK présentant un diamètre Dv50 compris entre 1 et 300 µm ;
b. 0.001 à 5 % en poids, calculé par rapport au poids de la résine, d'au moins un tensioactif thermiquement stable ;
c. 0 - 1 % en poids d'autres additifs ; et
d. le reste d'eau.

Selon un quatrième aspect enfin, l'invention a pour objet l'utilisation d'un semi-produit tel que décrit ci-dessus pour la fabrication de composites.

Dans les procédés de fabrication des pièces composites, les semi-produits sont soumis à différents cycles thermiques sous pression ou sous vide afin de les assembler entre eux pour former la pièce composite et/ou la mettre en forme.

### [Brève description des figures]

L'invention sera mieux comprise au regard de la description qui suit et la figure, laquelle montre :
- Fig. unique: l'évolution de la viscosité d'un échantillon de résine PEKK à teneur massique variable en fibres en 20 minutes à 375°C sous 1 Hz sous azote, selon l'exemple 2.

### [Description des modes de réalisation]

### Définition des termes

On entend par le terme « **semi-produit** » désigner des produits comprenant une résine et des fibres de renfort utilisés comme produits intermédiaires dans la fabrication de matériaux composites. Ces produits peuvent être notamment des pré-imprégnés sous formes de nappes unidirectionnelles de mèches, de tissés, ou encore des mélanges fibres-matrices.

Les semi-produits peuvent ensuite être assemblés, par exemple par drapage manuel ou automatisé ou par dépose robotisée (« automated fiber placement »), et mis en forme par consolidation, pour la fabrication de pièces composites. Les pièces composites ainsi fabriqués peuvent être transformées davantage, afin d'obtenir des assemblages de pièces composites complexes. Ainsi, il est possible de co-consolider des pièces composites, procédé généralement réalisé en autoclave au moyen d'un nouveau cycle thermique, ou de venir souder des pièces les unes aux autres par échauffement local.

On entend désigner par le terme de « **résine** » une composition comprenant majoritairement un ou plusieurs polymères additionnés le cas échéant des additifs conventionnels, notamment des charges et additifs fonctionnels.

On entend par le terme de « **dispersion** » désigner une composition hétérogène comportant une phase liquide et une phase solide. Dans la dispersion mise en oeuvre dans le procédé de l'invention, la phase liquide est aqueuse et contient un tensioactif thermiquement stable ainsi que d'autres additifs, le cas échéant. La phase solide comprend ou consiste essentiellement en la résine PAEK sous forme pulvérulente.

On entend par le terme de « **tensioactif** » désigner un composé présentant une partie hydrophile et une partie lipophile, et capable de disperser la poudre de résine dans la phase liquide et de la maintenir en suspension en présence ou en absence d'agitation. Ce composé peut aussi aider au mouillage des fibres par la dispersion.

On entend par un « **tensioactif thermiquement stable** » un tensioactif, lequel n'engendre pas, lorsqu'il est soumis à des températures de 375°C pendant au moins 20 min, des espèces réactives susceptibles de réagir de façon significative avec la résine PAEK.

Cette propriété est évaluée par le test suivant : La résine PAEK sous forme de poudre (diamètre médian en volume Dv50 = 20µm) est introduite dans une solution aqueuse contenant 1% en poids par rapport à la quantité de résine du tensioactif à évaluer (teneur en résine de la dispersion : 1% en poids). Le mélange obtenu est agité pendant 30 minutes à l'aide d'un agitateur magnétique. L'eau est ensuite évaporée dans une étuve à 90°C pendant 48 h. On obtient un résidu sec de résine PAEK additionnée de tensioactif. Ensuite, on soumet un échantillon de la résine PAEK additionnée de tensioactif à un traitement thermique à une température de 375°C pendant une durée de 20 minutes sous balayage d'azote.

Il s'est révélé délicat de mesurer la viscosité de ces échantillons. Aussi, la viscosité de la résine PAEK additionnée de tensioactif a été évaluée au moyen de la distribution des masses moléculaires, mesurée par analyse chromatographique d'exclusion stérique, selon le protocole suivant.

Environ 30 mg de résine PAEK additionnée de tensioactif à évaluer sont introduits dans 1 ml de 4-chlorophénol et agités pendant 24 h à 150°C. Après refroidissement de la solution à température ambiante, 14 ml de hexafluoroisopropanol (HFIP) sont ajoutés, puis la solution est filtrée sur un filtre seringue de type Acrodisc comprenant une membrane polytétrafluoroéthylène (PTFE) d'un diamètre de 25 mm et d'une porosité de 0.2 µm.

Les masses moléculaires de la résine sont déterminées par chromatographie d'exclusion stérique au moyen d'un instrument type Waters Alliance 2695 en utilisant les conditions ci-après :
Débit : 1.00 ml/min. Eluant : HFIP. Volume injecté : 100.00 µl. Jeu de colonnes PSS PFG (1000 + 100 Å) 2*30cm. Température 40°C. Mode de détection : réfractomètre différentiel. Etalonnage : PMMA avec une gamme de masses moléculaires de 402g/mol à 1900000g/mol à actualiser lors de chaque série d'analyse.

Le taux de solubles est mesuré par le rapport entre les aires des chromatogrammes de l'échantillon analysé d'une part, et d'un composé référence soluble d'autre part préparé à la même concentration et injecté en même quantité dans l'appareil de chromatographie.

Lorsque la masse moléculaire moyenne en poids M_{w} de la résine PAEK augmente de plus de 20% par rapport à la résine avant le traitement thermique, le tensioactif étudié est classé comme non stable thermiquement. A l'inverse, lorsque la masse moléculaire moyenne en poids M_{w} de la résine PAEK augmente de 20% ou moins, le tensioactif étudié est classé comme thermiquement stable.

On entend par un « **ensimage thermiquement stable** » un ensimage lequel n'engendre pas, lorsqu'il est soumis à des températures de 375°C pendant au moins 20 min, des espèces réactives susceptibles de réagir de façon significative avec la résine PAEK.

Cette propriété est évaluée par le test suivant : On prépare un mélange intime de 72 % en poids de résine PAEK (Dv50 = 20µm) et 28 % en poids de fibres ensimées à évaluer dans un mortier. Ensuite, on introduit un échantillon de ce mélange de résine PAEK et de fibres ensimées dans un rhéomètre plan-plan chauffé à 375°C et on mesure l'évolution de la viscosité sur 20 min. Lorsque la viscosité du mélange augmente de plus de 20%, l'ensimage est classé comme non stable thermiquement. A l'inverse, lorsque la viscosité du mélange augmente de 20% ou moins, l'ensimage étudié est classé comme thermiquement stable.

### La dispersion

La dispersion mise en oeuvre dans le procédé proposé comporte selon l'invention une phase aqueuse comprenant la résine PAEK sous forme de poudre ainsi qu'au moins un tensioactif thermiquement stable.

La résine de PAEK comporte pour l'essentiel au moins un polymère polyaryléthercétone (PAEK). Les poly-(aryl-éther-cétones) (PAEK) comportent les motifs de formules suivantes:

(- Ar - X -) et (- Ar₁ - Y - )

dans lesquelles :
- Ar et Ar₁ désignent chacun un radical aromatique divalent;
- Ar et Ar₁ peuvent être choisis, de préférence, parmi le 1,3-phénylène, 1,4-phénylène, le 4,4'-biphénylène, le 1,4- naphthylène, le 1,5-naphthylène et le 2,6-naphthylène, éventuellement substitués;
- X désigne un groupe électroattracteur ; il peut être choisi, de préférence, parmi le groupe carbonyle et le groupe sulfonyle,
- Y désigne un groupe choisi parmi un atome d'oxygène, un atome de soufre, un groupe alkylène, tel que -CH₂- et l'isopropylidène.

Dans ces motifs X et Y, au moins 50%, de préférence au moins 70% et plus particulièrement, au moins 80% des groupes X sont un groupe carbonyle, et au moins 50%, de préférence au moins 70% et plus particulièrement au moins 80% des groupes Y représentent un atome d'oxygène. Selon un mode de réalisation préféré, 100% des groupes X désignent un groupe carbonyle et 100% des groupes Y représentent un atome d'oxygène.

Plus préférentiellement, le poly-arylène-éther-cétone (PAEK) peut être choisi parmi :
- un poly-éther-cétone-cétone, également nommé PEKK, comprenant des motifs de formule I A, de formule I B et leur mélange : 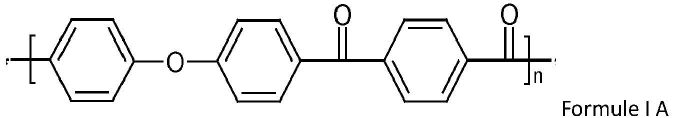 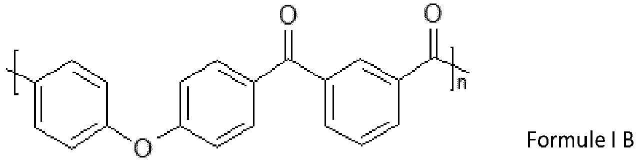
- un poly-éther-éther-cétone, également nommé PEEK, comprenant des motifs de formule Il:

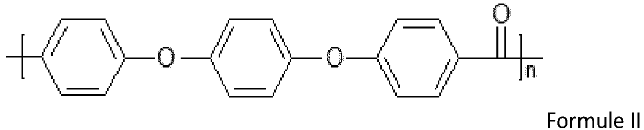

Les enchainements peuvent être totalement para (Formule II). De la même façon on peut introduire, partiellement ou totalement, des enchaînements méta dans ces structures au niveau des éthers et des cétones selon les deux exemples des formules III et IV ci-dessous :

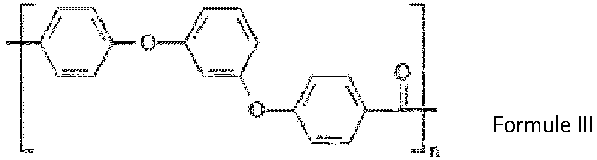

Ou encore :

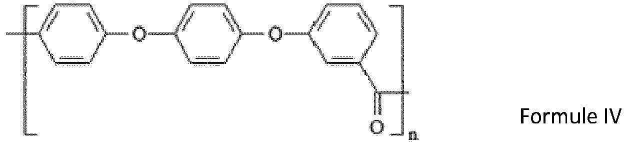

Ou des enchainements en ortho selon la formule V : 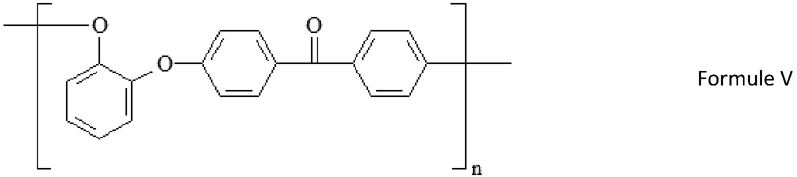
- un poly-éther-cétone, également nommé PEK, comprenant des motifs de formule VI :

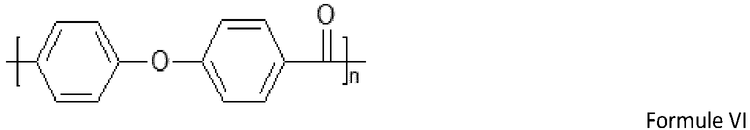

De la même façon, l'enchainement peut être totalement para mais on peut introduire aussi des enchaînements méta partiellement ou totalement (formules VII et VIII): 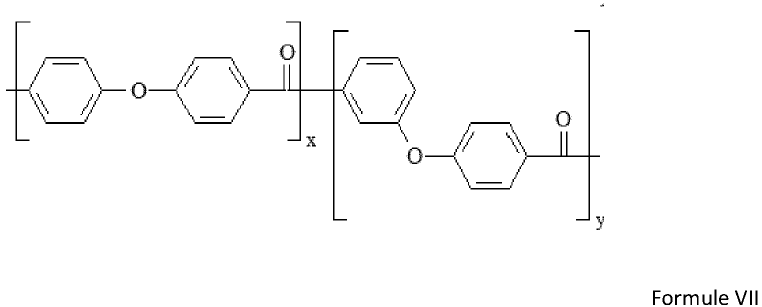 ou 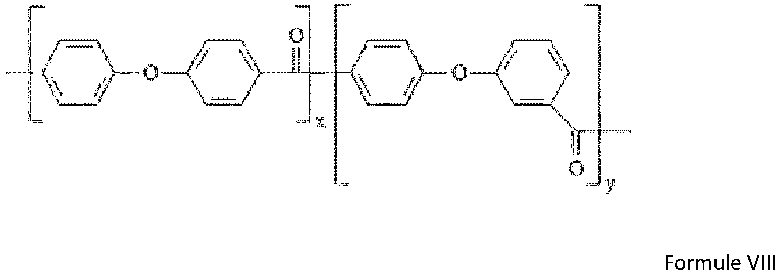
- un poly-éther-éther-cétone-cétone, également nommé PEEKK, comprenant des motifs de formules IX :

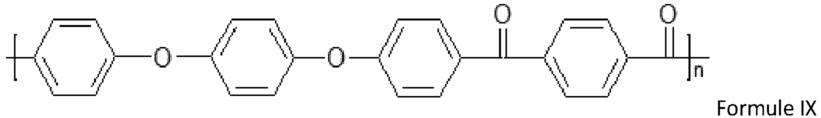

De la même façon on peut introduire des enchaînements méta dans ces structures au niveau des éthers et des cétones.
- un poly-éther-éther-éther-cétone, également nommé PEEEK, comprenant des motifs de formules X :

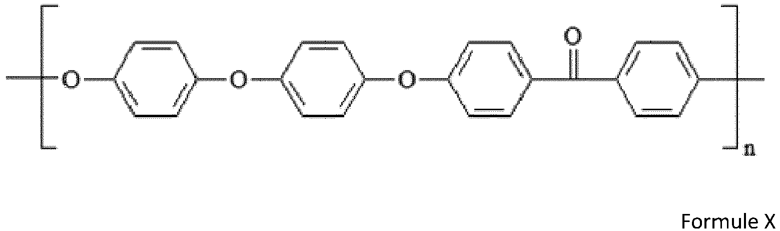

De la même façon on peut introduire des enchaînements méta dans ces structures au niveau des éthers et des cétones mais aussi des enchaînements biphénols ou diphényls selon la formule XI (motifs de type D dans les prochaines appellations, la formule XI correspond ainsi à l'appellation PEDEK) :

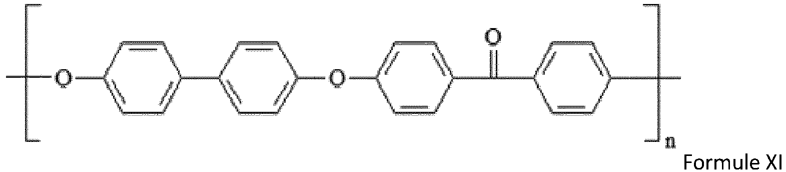

D'autres arrangements du groupe carbonyle et de l'atome d'oxygène sont également possibles.

De préférence, les PAEK utilisés dans l'invention sont choisis parmi le groupe constitué de poly-éther-cétone (PEK), polyéther-éther-cétone (PEEK), poly-éther-éther-cétone-cétone (PEEKK), poly-éther-éther-cétone-cétone (PEKK), poly-éther-cétone-éther-cétone-cétone (PEKEKK), poly-éther-éther-cétone-éther-cétone (PEEKEK), poly-éther-éther-éther-cétone (PEEEK), et poly-éther-diphényle-éther-cétone (PEDEK), leurs mélanges et leurs copolymères entre eux ou avec d'autres membres de la famille des PAEK. Le PEEK et le PEKK ainsi que leurs mélanges sont particulièrement préférés.

Avantageusement, la stabilité du PAEK à l'état fondu peut être améliorée par ajout d'un ou plusieurs phosphates ou sels de phosphate.

De préférence, la résine PAEK comprend au moins un polyéther-cétone-cétone (PEKK) qui représente plus de 50%, de préférence plus de 60%, notamment plus de 70%, encore préféré plus de 80% et en particulier plus de 90% massique de la résine, borne comprise. Les 10 à 50% massiques restants peuvent être constitués par d'autres polymères appartenant ou non à la famille des PAEK.

De manière davantage préférée, la résine PAEK est essentiellement constituée de PEKK.

Avantageusement, le PEKK présente un pourcentage massique en motifs téréphtaliques par rapport à la somme des motifs téréphtaliques et isophtaliques compris entre 35 et 100%, en particulier entre 50 et 90% notamment entre 55 et 85% et de préférence entre 60 et 80%, et tout particulièrement, ce rapport est de 65 à 75%.

La résine peut par ailleurs, comme discuté ci-dessus, comporter en outre d'autres additifs habituels tels que des charges. Par ailleurs, la résine peut comporter éventuellement des quantités mineures d'additifs fonctionnels. De préférence, la résine est néanmoins dépourvue d'additifs susceptibles de se décomposer sous l'effet de la chaleur afin de limiter le risque d'évolution de la viscosité. De manière encore plus préférée, la résine est dépourvue d'additifs fonctionnels.

La granulométrie de la poudre de résine de PAEK peut avoir un impact sur la stabilité de la suspension. Elle peut également influencer la qualité d'imprégnation en résine des fibres de renfort. Afin d'assurer l'homogénéité optimale de la suspension et une bonne imprégnation, il est préféré que la poudre de résine soit finement divisée. Plus spécifiquement, il est préféré que la poudre de PAEK présente un diamètre médian Dv50 est situé dans une plage de 1 à 300 µm, de préférence de 5 à 100 et tout particulièrement de 10 à 50 µm tel que mesuré selon la norme ISO 13 320.

De préférence, la teneur en poudre de résine PAEK de la dispersion est avantageusement comprise entre 0.1 et 50 %, de préférence entre 1 et 40%, et encore préféré entre 10 et 30% en poids par rapport au poids de la dispersion finie.

Comme évoqué précédemment, le procédé selon l'invention est caractérisé par le fait que la dispersion comporte par ailleurs au moins un tensioactif thermiquement stable. En effet, les études réalisées ont permis de démontrer que le tensioactif était le facteur principal de l'augmentation de la viscosité de la résine PAEK contenue dans un semi-produit observée suite au cycle thermique requis pour sa consolidation.

Le test décrit précédemment permet d'évaluer un tensioactif au niveau de son aptitude à supporter les températures requises sans former d'espèces réactives susceptibles de réagir de façon significative avec les résines PAEK. Il est ainsi possible de déterminer de manière simple et rapide si un tensioactif est thermiquement stable au sens de la présente invention.

A titre de tensioactif thermiquement stable, on peut choisir un tensioactif ionique ou non ionique. De préférence, il s'agit d'un tensioactif ionique, et en particulier d'un tensioactif anionique.

De préférence, le tensioactif thermiquement stable est un tensioactif comportant au moins une entité aromatique, notamment un ou plusieurs groupes phényle.

Selon un mode de réalisation particulièrement préféré, le tensioactif thermiquement stable comporte un groupe phosphorique, phosphate ou sulfonate. D'autre part, les phosphates et sulfonates semblent moins enclins à réagir avec les résines PAEK que d'autres tensioactifs lorsqu'ils sont utilisés dans le procédé d'imprégnation par dispersion aqueuse.

Plus spécifiquement, on peut citer notamment les tensioactifs de la famille des esters d'acide phosphorique. De préférence, il s'agit de monoesters ou diesters d'acide phosphorique. Il peut s'agir notamment d'esters d'acide phosphorique avec des alcools, notamment des alcools comportant 6 à 24 et en particulier 10 à 16 atomes de carbone. Particulièrement préférés sont des alkyléther phosphoriques, phosphates ou sulfonates et alkylaryléther phosphates ou sulfonates. Avantageusement, il s'agit de phosphates d'alcools alkoxylés, notamment méthoxylés, éthoxylés ou propoxylés. Le nombre de molécules d'alkoxyle par groupe de phosphate peut largement varier, et notamment être compris entre 1 et 100, de préférence entre 2 et 50 et tout particulièrement entre 10 et 20.

A titre de composés de cette famille, on peut citer notamment les tensioactifs de la famille des alkyléthers phosphoriques vendus sous la dénomination de Lanphos PE35 par la société Lankem, Cecabase RT par la société CECA France et Klearfac AA270 par la société DeWolf.

Ces tensioactifs peuvent être utilisés sous forme d'acide libre, mais il est de préférence neutralisé. La neutralisation peut être réalisée au préalable ou in situ dans la dispersion par ajout d'une quantité appropriée d'hydroxyde de sodium ou de potassium.

La dispersion comporte de préférence pas plus que la teneur minimale de tensioactif requise pour stabiliser la suspension de manière adéquate. Cette teneur dépend de facteurs tels que la taille de particules de la résine PAEK, la quantité de particules à disperser et la nature du tensioactif.

Il peut être intéressant d'ajouter plusieurs tensioactifs thermiquement stables. En particulier, on peut choisir un tensioactif thermiquement stable permettant d'assurer une bonne dispersion de la poudre de résine PAEK et un autre tensioactif thermiquement stable afin d'améliorer l'affinité des fibres de renfort avec la poudre de résine PAEK.

Néanmoins, le plus souvent, une teneur en tensioactif de 0.001 à 5% en poids, de préférence 0.01 à 2, et tout particulièrement de 0.1 à 1%, et notamment 0.2 à 0.8% en poids par rapport au poids de résine permet d'assurer la stabilité de la suspension et un bon mouillage des fibres.

La phase aqueuse de la dispersion peut, si nécessaire, comporter des quantités mineures d'autres additifs conventionnels tels que des agents épaississants, agents anti-mousse, agents biocides. Afin de limiter la présence d'additifs dans les semi-produits et les problèmes potentiels associés, la dispersion comporte néanmoins une teneur de préférence minimale d'autres additifs. De préférence, la quantité en autres additifs n'excèdera pas 1% en poids, et en particulier pas 0,5% en poids de la dispersion finie.

Afin de faciliter le mouillage des fibres, la dispersion présente avantageusement une viscosité inférieure à 10 Pa·s, avantageusement inférieure à 5, et en particulier comprise entre 0,0001 et 1, et de préférence comprise entre 0,001 et 0.1 Pas à 20°C.

De préférence, les additifs présents dans la dispersion seront thermiquement stables, tel que déterminé par le test décrit précédemment. Néanmoins, il est préféré que la phase aqueuse de la dispersion comporte un minimum d'additifs, et en particulier comporte seulement le tensioactif thermiquement stable.

L'eau utilisée pour préparer la dispersion est de préférence une eau déminéralisée.

Le procédé de préparation de la dispersion peut être réalisé de manière connue en soi. Plus spécifiquement, on peut préparer la dispersion en introduisant dans un récipient de volume adapté et muni d'un dispositif d'agitation approprié la quantité d'eau requise puis en ajoutant ensuite le tensioactif ainsi que le ou les autres additifs, le cas échéant. Si nécessaire, le mélange est agité jusqu'à l'obtention d'une solution homogène. Dans la solution aqueuse est ensuite introduit la résine de PAEK pulvérulente puis on agite jusqu'à obtention d'une dispersion stable.

### Les fibres de renfort

Les fibres de renfort peuvent être en principe des fibres quelconques habituellement utilisées dans la fabrication de semi-produits.

Conformément à l'invention, les fibres de renfort peuvent être choisies parmi toutes les fibres susceptibles d'être utilisées comme renfort dans la fabrication de pièces en matériaux composites.

Ainsi, il peut notamment s'agir de fibres de verre, de fibres de quartz, de fibres de carbone, de fibres de graphite, de fibres de silice, de fibres métalliques comme des fibres d'acier, des fibres d'aluminium ou des fibres de bore, de fibres céramiques comme des fibres de carbure de silicium ou de carbure de bore, de fibres organiques de synthèse comme des fibres d'aramide ou des fibres de poly(p-phénylène benzobisoxazole), plus connues sous le sigle PBO, ou encore de fibres de PAEK, ou encore de mélanges de telles fibres.

De préférence, il s'agit de fibres de carbone ou de fibres de verre, et plus particulièrement de fibres de carbone.

Selon un mode de réalisation préféré, les fibres n'induisent pas en combinaison avec les autres composés d'évolution notable de la viscosité du PAEK dans le semi-produit et dans le composite.

Les fibres sont de préférence non ensimées. Si elles sont ensimées, elles sont de préférence ensimées par un ensimage thermiquement stable tel que défini ci-dessus.

Les fibres de renfort utilisées pour la fabrication de semi-produits par imprégnation par voie de dispersion aqueuse sont généralement continues.

De préférence, elles se présentent sous la forme de fibres unidirectionnelles, par exemple sous forme de fils regroupant plusieurs milliers de filaments élémentaires (typiquement de 3000 à 48000) mesurant, par exemple, 6 à 10 µm de diamètre pour les fibres de carbone. Ce type de fibres est connu sous la dénomination de mèche (en anglais «rovings»).

Les fibres peuvent néanmoins aussi être organisées de manière différente, par exemple sous forme de mat, ou encore de textiles obtenus par tissage de mèches.

### Le procédé de fabrication des semi-produits

Le procédé de fabrication selon l'invention peut être réalisé de manière conventionnelle, sur l'équipement habituel, en mettant en oeuvre la dispersion telle que décrite ci-dessus. Comme indiqué précédemment, la présence dans la dispersion d'un tensioactif thermiquement stable permet de limiter la formation d'espèces réactives susceptibles d'augmenter la masse moléculaire de la résine et de ce fait sa viscosité, et par ce biais de réduire l'apparition de défauts dans les pièces composites.

Plus spécifiquement, les semi-produits sont obtenus par introduction et circulation des fibres de renfort dans un bain de dispersion aqueuse telle décrite ci-dessus. Les fibres imprégnées de résine PAEK sont ensuite sorties du bain et débarrassées de l'eau, par exemple par séchage dans un four à infra-rouges. Les fibres imprégnées séchées sont ensuite chauffées jusqu'à fusion de la résine, afin de permettre l'enrobage des fibres par la résine PAEK. Les fibres enrobées obtenues sont ensuite le cas échéant mises en forme, par exemple par calandrage, afin de mettre en forme et dimensionner le semi-produit.

De préférence, les semi-produits selon l'invention comportent de 1 à 99% en poids, de préférence 30 à 90%, en particulier 50 à 80% en poids, et en particulier 60 à 70% en poids de fibres de renfort.

Les semi-produits fabriqués selon le procédé de l'invention sont caractérisés en particulier par une résine dont la viscosité a peu évolué malgré les températures élevées requises pour leur fabrication afin de fondre la résine.

Les semi-produits obtenus selon le procédé de l'invention peuvent être utilisés notamment pour la fabrication de pièces composites.

Les pièces composites sont obtenues par exemple en fabriquant d'abord une préforme, notamment par placement ou drapage des semi-produits préimprégnés dans un moule. La pièce composite est ensuite obtenue par consolidation, étape lors de laquelle la préforme est chauffée et compressée, par exemple dans un autoclave ou dans une presse, de sorte à assembler par fusion les semi-produits.

Les produits composites fabriqués selon le procédé de l'invention sont caractérisés en particulier par une résine dont la viscosité a peu évolué malgré les températures élevées requises pour leur fabrication.

Lors de ces étapes, une viscosité pas trop élevée de la matrice est essentielle afin d'assurer que les semi-produits épousent bien les formes du moule. La viscosité de la matrice permet également d'assurer un bon écoulement pendant la consolidation et éviter ainsi les défauts de surface tels que des plissements.

L'invention sera expliquée plus en détail dans les exemples qui suivent.

### [Exemples]

### Exemple 1 à 3 : Evolution de la viscosité selon le procédé de fabrication du semi-produit

L'impact du cycle thermique sur l'évolution de la viscosité a été étudié pour une résine PEKK (Kepstan 7003, commercialisé par Arkema France) et pour des semi-produits fabriqués à partir de cette résine et des fibres de carbone selon différentes méthodes.

Les pré-imprégnés ont été fabriqués à échelle de laboratoire avec 70 % en poids de résine Kepstan 7003 et 30 % en poids de fibres de carbone d'une part selon un procédé par voie fondue et d'autre part par voie de dispersion, selon les protocoles respectifs suivants :

### 1) Méthode d'imprégnation par voie fondue :

On positionne environ 8 g de mèches de fibres de carbone (Fibre 12K à ensimage compatible époxy E13 commercialisée sous le nom de HTA40 par la société Toho-Tenax) sur un feuillet de polyimide (film Upilex de 50µm) d'épaisseur commercialisé par la société UBE) à l'aide d'un adhésif aluminium résistant en température.

Les mèches de fibres de carbone sont ensuite saupoudrées de 20g de poudre de PEKK (commercialisée sous le nom de Kepstan 7003 par la société Arkema France, Dv50 = 300µm) de façon homogène à l'aide d'un tamis vibrant. On couvre ensuite la surface de poudre de PEKK par un second feuillet polyimide.

L'assemblage est ensuite placé entre deux feuillets d'acier et est passé sous une presse CARVER à 375°C pendant 1 minute sous 5 bars. L'assemblage est ensuite sorti de la presse et laissé refroidir à température ambiante.

Après décollage des feuillets de polyimide et coupe des adhésifs aluminium, on obtient un préimprégné préparé par voie fondu. On divise le pré-imprégné obtenu en deux parties.

### 2) Méthode d'imprégnation par dispersion aqueuse :

On prépare une solution aqueuse de tensioactif par introduction dans une fiole de 1000g d'eau ainsi que de 0.1g de tensioactif Triton^{™} X100 (t-octylphénoxypolyéthoxyéthanol) commercialisé par la société Dow. La solution aqueuse est homogénéisée pendant 10 minutes à l'aide d'un agitateur magnétique.

On introduit ensuite graduellement 4g de fibres de carbone ensimées (HTA40 E13 commercialisé par la société Toho-Tenax) coupées à une longueur de 1 cm dans la fiole contenant la solution aqueuse sous agitation forte avec un homogénéiseur type Ultra-turrax. La dispersion obtenue est finalement homogénéisée pendant 10 minutes. A la fin de cette étape, les fibres de carbone ont été broyées de façon homogène et sont en suspension dans la solution aqueuse.

Ensuite, on ajoute 10g de poudre de PEKK (commercialisée sous le nom de Kepstan 7003 par la société Arkema France, Dv50 = 20µm) et le mélange obtenu est agité pendant 30 minutes à l'aide d'un agitateur magnétique.

L'eau est ensuite évaporée en étuve à 90°C pendant 48 h.

On obtient ainsi un mélange homogène de poudre de PEKK additionnée de tensioactif et de fibres de carbone. On réalise alors un préimprégné par compression à 375°C sous 5 bars pendant 1 minute comme décrit précédemment.

Les deux pré-imprégnés réalisés respectivement par voie fondue et par voie de dispersion aqueuse sont ensuite soumis à un cycle thermique reproduisant celui requis pour la consolidation des semi-produits. Le cycle thermique consiste en un passage dans un four à 375°C pendant 20 minutes sous balayage d'azote.

On mesure ensuite la masse moléculaire moyenne en poids M_{w} de la résine PEKK par chromatographie d'exclusion stérique, selon le protocole ci-dessous pour :
- la résine PEKK non transformée (exemple 1)
- l'échantillon obtenu par voie fondue (exemple 2) et
- l'échantillon mis en contact avec un tensioactif comme dans un procédé d'imprégnation par voie de dispersion aqueuse (exemple 3).

Pour les exemples 2 et 3, on réalise la mesure pour l'échantillon avant et après le cycle thermique.

Environ 30 mg de l'échantillon sont introduits dans 1 ml de 4-chlorophénol et agités pendant 24 h à 150°C. Après refroidissement de la solution à température ambiante, 14 ml de hexafluoroisopropanol (HFIP) sont ajoutés, puis la solution est filtrée sur un filtre seringue de type Acrodisc comprenant une membrane polytétrafluoroéthylène (PTFE) d'un diamètre de 25 mm et d'une porosité de 0.2 µm.

Les masses moléculaires de la résine dans l'échantillon sont déterminées par chromatographie d'exclusion stérique au moyen d'un instrument type Waters Alliance 2695 en utilisant les conditions ci-après :
Débit : 1.00 ml/min. Eluant : HFIP. Volume injecté : 100.00 µl. Jeu de colonnes PSS PFG (1000 + 100 Å) 2*30cm. Température 40°C. Mode de détection : réfractomètre différentiel. Etalonnage : PMMA avec une gamme de masses moléculaires de 402g/mol à 1900000g/mol à actualiser lors de chaque série d'analyse.

Le taux de solubles est mesuré par le rapport entre les aires des chromatogrammes de l'échantillon analysé d'une part, et d'un composé référence soluble préparé à la même concentration et injecté en même quantité dans l'appareil de chromatographie d'autre part. Le taux d'insolubles est alors constitué du taux de fibres de carbone et du taux de polymère insoluble. On prendra alors soin de soustraire le taux de fibres de carbone pour obtenir uniquement le taux de polymère insoluble.

Les résultats sont rassemblés dans le tableau 1 ci-dessous.

Les résultats dans le tableau 1 démontrent que l'évolution de la masse moléculaire moyenne en poids M_{W} de la résine dans l'échantillon contenant un tensioactif tel que nécessaire dans la voie de dispersion est plus du double de celle dans un semi-produit fabriqué par voie fondue.

De plus, on remarque dans l'exemple 3 réalisé par voie de dispersion, une augmentation notable de la fraction d'insolubles, signe qu'une partie du polymère est modifié au point qu'il ne peut plus être dissous dans les conditions expérimentales.

**Tableau 1 : Evolution de la masse moléculaire moyenne en poids M_{W} de la résine PEKK**

| **Ex** | **Matériau** | **avant cycle thermique** | | **après cycle thermique** | | **Evolution sur M_{w}** |
|---|---|---|---|---|---|---|
| | | M_{w} (g/mol) | Insolubles (%) | M_{w} (g/mol) | Insolubles (%) | (%) |
| 1 | Résine PEKK (Kepstan 7003) (référence) | 54000 | - | 58000 | - | 7.5% |
| 2 | Echantillon obtenu par voie fondue | 54000 | - | 69000 | <5% | 28% |
| 3 | Echantillon obtenu par voie de dispersion | 59000 | - | >100000 | 15% | >100% |

### Exemple 4 à 12 : Evolution de la viscosité selon la nature des fibres de carbone

L'impact du cycle thermique sur l'évolution de la viscosité a été étudié pour des échantillons contenant des fibres de carbone provenant de différents fabricants et ensimées ou non. Les fibres utilisées ici sont les suivantes :
- Fibre HexTow AS4 commercialisée par Hexcel (non ensimée).
- Fibre HexTow AS4D commercialisée par Hexcel (non ensimée).
- Fibre Tenax HTS45 P12 commercialisée par Toho-Tenax (avec ensimage compatible thermoplastique).
- Fibre Tenax HTA40 E13 commercialisée par Toho-Tenax (avec ensimage compatible époxy).

Des mélanges de résine PEKK et de ces fibres de carbone ont été fabriqués selon le protocole suivant :
Une quantité de 2g de poudre de résine PEKK (Kepstan 7002, commercialisé par Arkema France, Dv50 = 20µm) est introduite dans un mortier. On ajoute une quantité 14, 28 et 43% en poids, par rapport à au poids total de l'échantillon, de fibres coupées à une longueur de 0.5 cm.

Un mélange mécanique est réalisé dans le mortier en présence de quelques gouttes d'eau permettant d'aider à la mouillabilité et à la bonne dispersion des fibres dans la résine. Les mélanges ainsi réalisés sont ensuite séchés pendant 12 heures sous vide à 120°C. On mesure ensuite pour chaque échantillon la viscosité dans un rhéomètre plan-plan sous azote (1Hz) à 375°C en fonction du temps pendant 20 minutes. L'évolution de la viscosité (en %) sous l'effet du cycle thermique reproduisant celui requis pour la consolidation des semi-produits peut être évaluée en comparant la valeur de viscosité mesurée à l'instant initial et après 20 minutes d'essai.

Les résultats pour les différents mélanges réalisés sont rassemblés dans le tableau 2 ci-dessous et à la figure unique.

**Tableau 2 : Composition des exemples, et évolution de la viscosité**

| **Ex** | **Résine PEKK [% en poids]** | **Fibres AS4 [% en poids]** | **Fibres AS4D [% en poids]** | **Fibres HTS45 P12 [% en poids]** | **Fibres HTA40 E13 [% en poids]** | **Evolution de la viscosité (%)** |
|---|---|---|---|---|---|---|
| 4 | 100% | | | | | 0% |
| 5 | 72% | 28% | | | | 16% |
| 6 | 57% | 43% | | | | 3% |
| 7 | 72% | | 28% | | | 12% |
| 8 | 57% | | 43% | | | 14% |
| 9 | 86% | | | 14% | | 27% |
| 10 | 72% | | | 28% | | 33% |
| 11 | 86% | | | | 14% | 21% |
| 12 | 72% | | | | 28% | 110% |

Les résultats dans le tableau 2 et la figure unique mettent en évidence que la présence de fibres de carbone a un effet notable sur l'évolution de la viscosité de la résine PAEK. Par ailleurs, on note que cet effet est très variable selon la nature des fibres mises en oeuvre. En particulier, on constate que les fibres non ensimées ont un effet moindre en comparaison avec les fibres ensimées. Parmi les fibres ensimées, on note enfin que certains ensimages peuvent avoir un effet très néfaste sur la viscosité de la résine PAEK.

Aussi, on peut déduire de cette étude le lien entre l'augmentation de la viscosité et la présence d'espèces exogènes, après traitement thermique. On conclut par ailleurs à l'intérêt d'utiliser de préférence des fibres non ensimées.

### Exemple 13-21 : Evaluation de la stabilité thermique de tensioactifs

L'impact du cycle thermique sur l'évolution de la masse moléculaire moyenne en poids M_{W} a été étudié pour une résine PEKK (Kepstan 7002, commercialisé par Arkema France) pour différents tensioactifs.

Les échantillons ont été fabriqués selon le protocole suivant :
On prépare une solution aqueuse de tensioactif par introduction dans une fiole de 1000g d'eau ainsi que de 0.1g d'un tensioactif. La solution aqueuse est homogénéisée pendant 10 minutes à l'aide d'un agitateur magnétique. Ensuite, on ajoute 10g de poudre de PEKK (commercialisée sous le nom de Kepstan 7002 par la société Arkema France, Dv50 = 20µm) et le mélange obtenu est agité pendant 30 minutes à l'aide d'un agitateur magnétique. L'eau est ensuite évaporée en étuve à 90°C pendant 48 h. On obtient ainsi un mélange homogène de poudre de PEKK additionnée de tensioactif.

Les différents exemples sont préparés avec les tensioactifs indiqués ci-dessous.
- Le tensioactif Cremophor^{®} A25 (alcool en C16-C18 éthoxylé) commercialisé par la société BASF.
- Le tensioactif Brij^{®} S 100 (alcool stéarylique éthoxylé) commercialisé par la société Sigma-Aldrich.
- Le tensioactif Lanphos PE35 (isotridécyléthoxyphosphate) commercialisé par la société Lankem, utilisé ici sous forme neutralisé par de la soude désigné comme « Lamphos PE35Na ».
- Le tensioactif Agrosurf DIS145 (condensat de naphtalènesulfonate de sodium et de formaldéhyde) commercialisé par la société Lankem.
- Le tensioactif Triton^{™} X100 (t-octylphénoxypolyéthoxyéthanol) commercialisé par la société Dow.
- Le tensioactif Triton^{™} GR-7ME (dioctylsulfosuccinate dissout dans hydrocarbure aromatique) commercialisé par la société Dow.

Une partie des échantillons préparés est utilisée pour mesurer la masse moléculaire moyenne en poids M_{w} de la résine PEKK avant et après cycle thermique tel que décrit à l'exemple 3. Les résultats sont rassemblés dans le tableau 3 ci-dessous.

**Tableau 3 : Masse moléculaire moyenne en poids M_{W} de résine PEKK contenant différents tensioactifs**

| **Ex** | **Matériau** | **Avant cycle thermique** | | **Après cycle thermique** | | **Evolution [%]** |
|---|---|---|---|---|---|---|
| | | **M_{w} [g/mol]** | Insolubles (%) | **M_{w} [g/mol]** | Insolubles (%) | |
| 13 | Résine PEKK seule (référence) | 65000 | - | 68000 | - | 5% |
| 14 | Résine PEKK avec 1% de tensioactif Cremophor^{®} A25 | 65000 | - | 87000 | <5% | 22% |
| 15 | Résine PEKK avec 1% de tensioactif Brij^{®} S 100 | 65000 | - | 84000 | <5% | 25% |
| 16 | Résine PEKK avec 1% de tensioactif Lanphos PE35Na | 65000 | - | 72000 | <5% | 10% |
| 17 | Résine PEKK avec 1% de tensioactif Agrosurf DIS145 | 65000 | - | 69000 | <5% | 5% |
| 18 | Résine PEKK avec 1% de tensioactif Triton^{™} X100 | 65000 | - | >100000 | >5% | 70% |
| 19 | Résine PEKK avec 1% de tensioactif Triton^{™} GR-7ME | 65000 | - | 91000 | <5% | 40% |

Les résultats dans le tableau 3 ci-dessus mettent en évidence un effet marqué du choix du tensioactif sur l'évolution de la viscosité de la résine PAEK.

En particulier, on note que les tensioactifs Lanphos PE35Na et Agrosurf DIS145 sont stables thermiquement avec le PEKK dans les conditions de test, puisque la masse moléculaire moyenne en poids M_{w} de la résine augmente de moins de 20% après un cycle thermique de 20 min à 375°C.

En revanche, les tensioactifs Cremophor^{®} A25, Brij^{®} S 100, Triton^{™} GR-7ME et Triton^{™} X100 testés ne satisfont pas à ce test, puisque la masse moléculaire moyenne en poids M_{w} de la résine augmente de de 30% voire de jusqu'à 70%.

Ainsi, l'évolution de la masse moléculaire moyenne en poids M_{W} de l'exemple 18 réalisé avec le tensioactif Triton^{™} X100 est très significativement supérieure à celle mesurée sur les échantillons des exemples 16 et 17 réalisé respectivement à l'aide des tensioactifs PE35Na et DIS145.

Les éléments rapportés ci-dessus montrent que la nature du tensioactif constitue un facteur important pour maîtriser l'évolution de la viscosité et de la masse moléculaire moyenne en poids M_{W} d'une résine PAEK soumise à un cycle thermique représentatif de celui requis pour la consolidation d'un semi-produit en pièces composites.

### Exemple 20-22 : Evolution de la viscosité selon le tensioactif

L'impact du cycle thermique sur l'évolution de la masse moléculaire moyenne en poids M_{W} a été étudiée pour une résine PEKK (Kepstan 7002, commercialisé par Arkema France) avec différents tensioactifs, en présence de fibres de carbone non ensimées AS4D commercialisées par Hexcel.

Les échantillons ont été fabriqués selon le protocole de l'exemple 3 ci-dessus, avec les tensioactifs indiqués ci-dessous.
- Le tensioactif Cremophor^{®} A25 commercialisé par la société BASF.
- Le tensioactif Lanphos PE35Na commercialisé par la société Lankem.

On soumet une partie des échantillons préparés à un cycle thermique et mesure ensuite la masse moléculaire moyenne en poids M_{w} de la résine PEKK des échantillons avant et après cycle thermique tel que décrit à l'exemple 3.

Les résultats sont rassemblés dans le tableau 4 ci-dessous.

**Tableau 4 : Masse moléculaire moyenne en poids M_{W} de résine PEKK contenant différents tensioactifs**

| **Ex** | **Matériau** | **Avant cycle thermique** | | **Après cycle thermique** | | **Evolution [%]** |
|---|---|---|---|---|---|---|
| | | **Mw [g/mol]** | Insolubles (%) | **Mw [g/mol]** | Insolubles (%) | |
| 20 | Résine PEKK seule (référence) | 65000 | - | 68000 | - | 5% |
| 21 | Résine PEKK avec 30% de fibres AS4D et 1% de tensioactif Cremophor^{®} A25 | 65000 | - | 87000 | <5% | 30% |
| 22 | Résine PEKK avec 30% de fibres AS4D et 1% de tensioactif PE35Na | 65000 | - | 75000 | <5% | 15% |

Les résultats dans le tableau 4 mettent en évidence un effet marqué du choix du tensioactif sur l'évolution de la viscosité de la résine PAEK.

En effet, le tensioactif PE35Na est plus stable avec le PEKK dans les conditions de test que le tensioactif Cremophor^{®} A25. L'évolution de masse moléculaire moyenne en poids M_{W} de l'exemple 21 réalisé avec le tensioactif Cremophor^{®} A25 est très significativement supérieure à celle mesurée sur l'échantillon de l'exemple 22 réalisé à l'aide du tensioactif PE35Na.

De plus, on remarque une fraction importante d'insolubles dans l'échantillon, traduisant la présence de polymère ne pouvant être mis en solution par le protocole expérimental.

On constate de l'ensemble des études rapportées ci-dessus que la nature du tensioactif constitue un facteur essentiel concernant l'évolution de la viscosité et de la masse moléculaire moyenne en poids M_{W} d'une résine PAEK soumise à un cycle thermique représentatif de celui requis pour la consolidation d'un semi-produit en pièces composites.

Cet effet peut néanmoins être sensiblement atténué par un choix adapté du tensioactif. En particulier, l'utilisation d'un tensioactif thermiquement stable aux températures de fusion des polymères PAEK permet de limiter la formation d'espèces réactives.

Par ailleurs, le choix de fibres de renfort adaptées, ensimées ou non, permet encore de réduire l'augmentation de la viscosité.

L'utilisation d'un tensioactif thermiquement stable lors de la fabrication de semi-produits selon le procédé de l'invention permet donc, en préservant la viscosité de la résine PAEK, d'assurer une bonne qualité des pièces composites obtenues à partir de ceux-ci.

### [Liste des documents cités]

WO 88/03468
US 5,236,972
US 5,888,580
FR 3 034 425

## Revendications

1. Procédé de préparation d'un semi-produit comprenant une résine à base de PAEK et des fibres de renfort, comprenant les étapes de :
a. Préparation d'une dispersion comprenant une résine à base de PAEK sous forme pulvérulente dispersée dans une phase aqueuse comprenant au moins un tensioactif ;
b. Mise en contact des fibres de renfort avec ladite dispersion aqueuse ;
c. Séchage des fibres imprégnées de dispersion ; et
d. Chauffage des fibres imprégnées à une température suffisante pour la fusion de la résine, de sorte à former un semi-produit,
**caractérisé en ce que** le tensioactif est un tensioactif thermiquement stable.

2. Procédé de préparation selon la revendication 1, dans lequel le tensioactif le tensioactif comporte des groupements aromatiques.

3. Procédé de préparation selon l'une des revendications 1 à 2, dans lequel le tensioactif comporte un groupe phosphorique, phosphate ou sulfonate.

4. Procédé de préparation selon l'une des revendications 1 à 3, dans lequel les fibres de renfort sont des fibres de carbone.

5. Procédé de préparation selon l'une des revendications 1 à 4, dans lequel les fibres de renfort sont des fibres non ensimées.

6. Procédé de préparation selon l'une des revendications 1 à 5, dans lequel les fibres de renfort sont des fibres ensimées avec un ensimage thermiquement stable.

7. Procédé de préparation selon l'une des revendications 1 à 6, dans lequel la résine PAEK est choisie parmi le groupe constitué de poly-éther-cétone (PEK), polyéther-éther-cétone (PEEK), poly-éther-éther-cétone-cétone (PEEKK), poly-éther-éther-cétone-cétone (PEKK), poly-éther-cétone-éther-cétone-cétone (PEKEKK), poly-éther-éther-cétone-éther-cétone (PEEKEK), poly-éther-éther-éther-cétone (PEEEK), et poly-éther-diphényle-éther-cétone (PEDEK), leurs mélanges et leurs copolymères entre eux ou avec d'autres membres de la famille des PAEK.

8. Procédé de préparation selon l'une des revendications 1 à 7, dans lequel la résine PAEK est un PEKK présentant un pourcentage massique en motifs téréphtaliques par rapport à la somme des motifs téréphtaliques et isophtaliques compris entre 35 et 100%, en particulier entre 50 et 90% et notamment entre 55 et 85%.

9. Procédé de préparation selon l'une des revendications 1 à 8, dans lequel la résine PAEK pulvérulente dans la dispersion présente un diamètre médian en volume Dv50 tel que mesuré selon la norme ISO 13 320 de 1 à 300 µm, de préférence de 5 à 100 et tout particulièrement de 10 à 50 µm.

10. Procédé de préparation selon l'une des revendications 1 à 9, dans lequel le semi-produit est choisi parmi un pré-imprégné ou une tape.

11. Dispersion utile dans la préparation d'un semi-produit comprenant une résine à base de PAEK et des fibres de renfort, comprenant :
a. 1 et 50 % en poids de résine à base de PAEK présentant un diamètre Dv50 tel que mesuré selon la norme ISO 13 320 compris entre 1 et 300 µm ;
b. 0.001 à 5 % en poids, calculé par rapport au poids de la résine, d'au moins un tensioactif thermiquement stable ;
c. 0 - 1 % en poids d'autres additifs ; et
d. le reste d'eau.

12. Semi-produit comprenant une résine à base d'un PAEK et des fibres de renfort, susceptible d'être obtenu par le procédé tel que défini dans les revendications précédentes.

13. Semi-produit selon la revendication 12, dans lequel la masse moléculaire moyenne en poids M_{W} de la résine PAEK, telle que mesurée par analyse chromatographique d'exclusion stérique, n'augmente pas de plus de 100% après traitement thermique à 375°C pendant 20 minutes.

14. Utilisation d'un semi-produit selon l'une des revendications 12 à 14 pour la fabrication de matériaux composites.
